**Europäisches Patentamt**

**European Patent Office**

**Office européen des brevets**

(19)

(11) Veröffentlichungsnummer: **0 288 740 B1**

# EUROPÄISCHE PATENTSCHRIFT

(12)

(45) Veröffentlichungstag der Patentschrift: **06.11.91**

(51) Int. Cl.⁵: **G06F 13/40**

(21) Anmeldenummer: **88104685.8**

(22) Anmeldetag: **23.03.88**

(54) **Schaltungsanordnung zur beschleunigten Umladung des Spannungspegels einer Bus-Leitung einer integrierten Schaltung.**

(30) Priorität: **28.04.87 DE 3714134**
**23.12.87 DE 3743932**

(43) Veröffentlichungstag der Anmeldung:
**02.11.88 Patentblatt 88/44**

(45) Bekanntmachung des Hinweises auf die Patenterteilung:
**06.11.91 Patentblatt 91/45**

(84) Benannte Vertragsstaaten:
**AT DE FR GB IT LU NL**

(56) Entgegenhaltungen:
**EP-A- 0 056 434      EP-A- 0 082 980**
**EP-A- 0 138 651      EP-A- 0 175 526**
**DE-A- 3 228 013      US-A- 4 498 021**

**PATENT ABSTRACTS OF JAPAN, Band 9, Nr. 217 (P-385)[1940], 4. September 1985; & JP-A-60 75 960 (TOSHIBA K.K.) 30-04-1985**

(73) Patentinhaber: **SIEMENS AKTIENGESELL-SCHAFT**
**Wittelsbacherplatz 2**
**W-8000 München 2(DE)**

(72) Erfinder: **Oliveira, Antonio de, Dipl.-Ing.**
**Fäustlestrasse 12**
**W-8000 München 2(DE)**
Erfinder: **Stärk, Jakob, Dipl.-Ing.**
**Georg-Queri-Strasse 12**
**W-8047 Karlsfeld(DE)**

**Beschreibung**

Die Erfindung betrifft eine Schaltungsanordnung an einer Bus-Leitung einer integrierten Schaltung zur Datenübertragung zwischen Daten-Sendern und Daten-Empfängern, wobei während einer Vorladephase die Bus-Leitung auf einen bestimmten elektrischen Spannungspegel geladen wird und während einer Datenübertragungsphase, entsprechend der zu übertragenden digitalen Information, der Spannungspegel der Bus-Leitung belassen oder innerhalb einer Umladephase umgeladen wird.

In integrierten Schaltungen sind zur Datenübertragung alle Daten-Sender (z.B. Arbeitsspeicher) und alle Daten-Empfänger (z. B. Zentraleinheit) an einen gemeinsamen Bus angeschlossen, der in einen Adreß-, Daten- und Steuerbus aufgeteilt sein kann. Jeder Bus besteht je nach dem ihm zugrundeliegenden Betriebssystem aus mehreren Bus-Leitungen, die für die Datenübertragung während einer sogenannten Vorladephase auf einen bestimmten elektrischen Spannungspegel, z.B. $V_{CC}$, vorgeladen werden. Bevorzugterweise liegt dieser Spannungspegel bereits im Bereich eines der binären Logik-Pegel L (Low) oder H (High), damit zur Übertragung dieses Logik-Pegels die Bus-Leitung nicht umgeladen werden muß.

Eine Umladung der Bus-Leitung ist immer dann notwendig, wenn der entgegengesetzte Logik-Pegel zu übertragen ist. Um die Arbeitsgeschwindigkeit eines Mikrocomputers nicht zu beeinträchtigen, muß diese Umladung unter Beachtung ausreichender Störspannungsabstände und unter Gewährung einer zuverlässigen Zustandserkennung in möglichst kurzer Zeit abgeschlossen sein.

Mit wachsender Integrationsdichte ergeben sich zwangsläufig längere Bus-Leitungen mit größeren Bus-Leitungskapazitäten, die bei unveränderten Umladesteuerungen zu längeren Umladezeiten und damit niedrigeren Übertragungsraten führen.

Zur Lösung dieser Probleme werden beispielsweise in den Druckschriften DE-32 28 013 Al und US-4,498,02l Schaltungen angegeben, die entsprechend der zu übertragenden Information den Spannungspegel der Bus-Leitung belassen oder innerhalb der Umladephase mittels Triggerschaltungen, die bei Erreichen eines vorgegebenen Triggerpegels eine zusätzliche, beschleunigte Entladung bzw. Ladung der Bus-Leitung bewirken, umladen.

Aufgabe der Erfindung ist es, eine Triggerschaltung an eine Bus-Leitung anzuschalten, welche die notwendige Umladungszeit von einem der binären Pegelzustände auf den anderen noch weiter verkürzt.

Gelöst wird diese Aufgabe bei einer Bus-Leitung der obengenannten Art erfindungsgemäß dadurch, daß die Bus-Leitung in N Teilleitungen aufgeteilt ist, von denen jede über ein Schaltglied, welches den Triggerpegel mit dem jeweiligen Spannungspegel vergleicht, an einen Eingang eines logischen Gatters angeschlossen ist und daß der Ausgang des logischen Gatters N Entladetransistoren zur schnellen Entladung jeder einzelnen Teilleitung ansteuert.

Das Signal zum Umladen der Bus-Leitung, das zunächst immer nur in einer Teilleitung auftritt, wird dabei durch die Triggerschaltung auf die restlichen Teilleitungen übertragen. Erfindungsgemäß werden hierzu alle Teilleitungen über das logische Gatter so verknüpft, daß eine beschleunigte Einzelumladung aller Teilleitungen erfolgt.

Der Triggerpegel ist dabei so zu wählen, daß er unverzüglich, jedenfalls möglichst bald nach Beginn der Umladephase erreicht wird, ohne den Störspannungsabstand zu stark zu verringern.

Durch die Aufteilung der Bus-Leitung in N Teilleitungen lassen sich die effektive Bus-Leitungskapazität auf 1/N der Ausgangskapazität und somit auch die Umladezeit nochmals auf annähernd 1/N der bereits durch bekannte Triggerschaltungsanordnungen verkürzten Umladezeit reduzieren.

In der Zeichnung sind eine bekannte Ausführungsform und zwei bevorzugte Ausführungsbeispiele von Schaltungsanordnungen nach der vorliegenden Erfindung dargestellt und im folgenden anhand der Figuren 1 bis 5 näher erläutert. Es zeigt:

FIG 1    eine an eine Bus-Leitung einer integrierten Schaltung angeschaltete, bekannte Schaltungsanordnung,

FIG 2    den durch die Schaltungsanordnung nach FIG 1 erzielbaren Spannungsverlauf,

FIG 3    eine Schaltungsanordnung nach der Erfindung für eine N-geteilte Bus-Leitung,

FIG 4    den durch die Schaltungsanordnung nach FIG 3 erzielbaren Spannungsverlauf und

FIG 5    eine weitere Schaltungsanordnung nach der Erfindung für eine N-geteilte Bus-Leitung

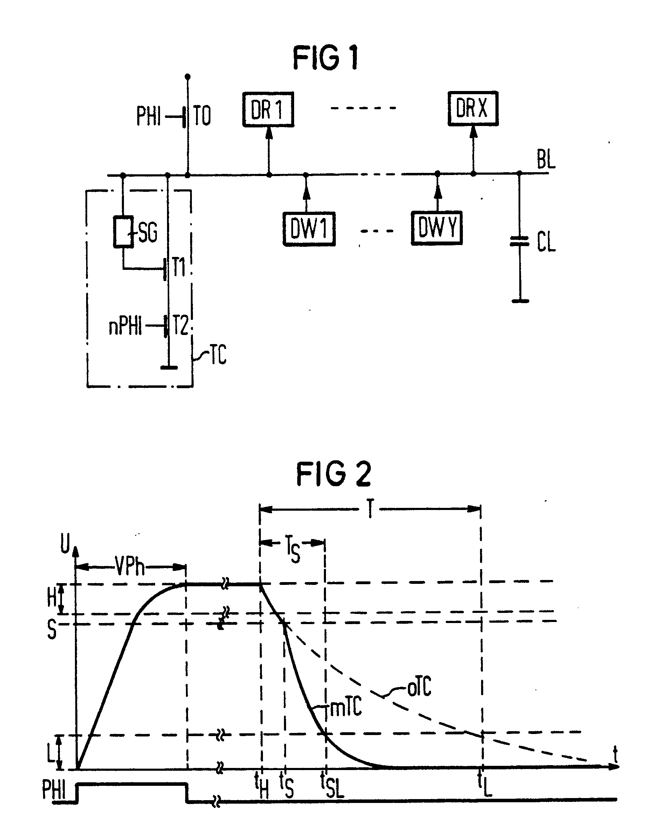

Nach FIG 1 sind an eine Bus-Leitung BL mit der Buskapazität CL Daten-Sender DW1 bis DWY und Daten-Empfänger DR1 bis DRX angeschlossen. Über einen Vorladetransistor TO, der gleichfalls an der Bus-Leitung BL liegt, wird diese auf einen bestimmten Spannungspegel vorgeladen. Die an die Bus-Leitung BL angeschaltete Triggerschaltung TC enthält ein Schaltglied SG, das den Spannungspegel mit dem Triggerpegel S vergleicht und über seinen Ausgang auf einen Entladetransistor T1 einwirkt, dem wiederum ein Sperrtransistor T2 nachgeschaltet ist.

Die Betriebsweise der Schaltungsanordnung nach FIG 1 wird anhand von FIG 2 erläutert, die den Spannungsverlauf auf der Bus-Leitung BL während einer Vorladephase VPh und einer anschließenden Umladephase wiedergibt. Während der Vorladephase VPh wird über den Vorladetransistor TO, der über ein Ladesignal PHI angesteuert wird, eine Versorgungsspannung an die Bus-Leitung BL angelegt und diese damit auf den betriebsinternen Logik-Pegel H angehoben. Um einen Kurzschluß zwischen unterschiedlichen Potentialen auszuschließen liegt dabei das inverse Ladesignal nPHI am Gate des Sperr-Transistors T2 an. Bei Erreichen des Logik-Pegels H steht schließlich die Bus-Leitung zur Übertragung eines binären H bereit.

Falls jedoch ein binäres L zur Übertragung ansteht, muß die Bus-Leitung BL zunächst auf den Spannungspegel L umgeladen werden. Diese Umladung wird zum Zeitpunkt $t_H$ durch eine nicht dargestellte Umladesteuerung ausgelöst. Ohne die Triggerschaltung TC fällt dabei der Spannungspegel entsprechend der gestrichelt dargestellten Umladekurve oTC von H nach L ab und erreicht bei $T_L$ den L-Zustand. Durch die bekannte Triggerschaltung TC schaltet jedoch mit Erreichen des Triggerpegels S der Entladetransistor T1 durch, wodurch sich wiederum die Bus-Leitung BL entsprechend der Umladekurve mTC beschleunigt umlädt und bereits zum Zeitpunkt $t_{SL}$ den L-Pegel erreicht. Die Entladezeit verkürzt sich dadurch von

$$T = t_L - t_H \text{ auf } T_S = t_{SL} - t_H.$$

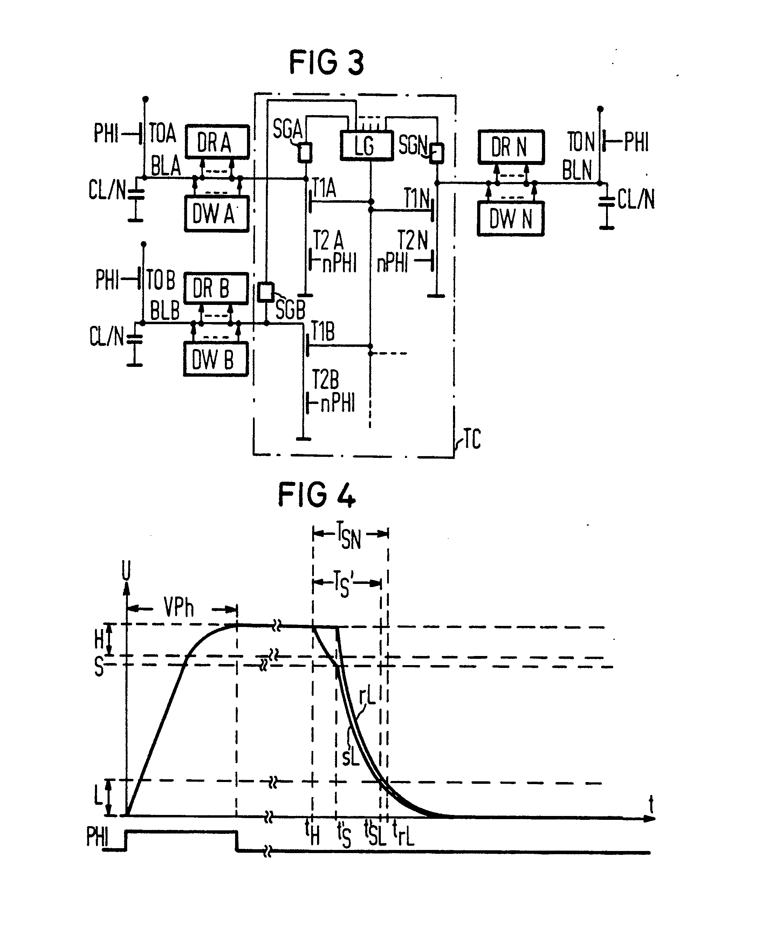

Im Unterschied zur vorbekannten Schaltungsanordnung und Fig 1, 2 ist beim erfindungsgemäßen Ausführungsbeispiel nach FIG 3 eine Bus-Leitung in N Teilleitungen mit den Buskapazitäten CL/N aufgetrennt und an eine gemeinsame Triggerschaltung TC angeschlossen. Den N Teilleitungen BLA, BLB,.., BLN sind dabei jeweils Daten-Sender DWA, DWB,...,DWN, Datenempfänger DRA, DRB,...,DRN und Vorladetransistoren TOA, TOB,..., TON zugeordnet. Die Triggerschaltung TC enthält Entladetransistoren T1A, T1B,..., T1N, Schaltglieder SGA, SGB,...,SGN, ein logisches Gatter LG und Sperr-Transistoren T2A, T2B,...,T2N, wobei letztere wiederum zum Schutz der Schaltungsanordnung mit dem inversen Ladesignal nPHI beaufschlagt sind. Die Ausgänge der jeweiligen Schaltglieder SGA, SGB,..., SGN sind mit dem logischen Gatter LG so verknüpft, daß dessen Ausgangssignal auf die Entladetransistoren T1A, T1B, ..., T1N wirkt und zu einer beschleunigten Einzelumladung aller N Teilleitungen führt.

In FIG 4 ist der Spannungsverlauf der Schaltungsanordnung nach FIG 3 aufgetragen. Auch in dieser Schaltungsanordnung werden analog zum Ausführungsbeispiel nach FIG 1 während einer Vorladephase VPh die Teilleitungen BLA, BLB,..., BLN über die jeweiligen Vorladetransistoren TOA, TOB,..., TON auf den Logikpegel H aufgeladen, indem über das Ladesignal PHI die Vorladetransistoren TOA, TOB,..., TON niederohmig geschaltet werden. Die Sperrtransistoren T2A, T2B,..., T2N befinden sich währenddessen wiederum, und zwar bedingt durch das inverse Ladesignal, nPHI in ihrem hochohmigen Zustand. Obwohl bei dieser Schaltungsanordnung die Bus-Leitung in N Teilleitungen aufgetrennt ist, kann trotzdem von jedem Daten-Sender einer Teilleitung der Logikpegel H auf jeden beliebigen Datenempfänger, d.h. auch auf den einer anderen Teilleitung, übertragen werden.

Zur Übertragung des Logikpegels L muß der Spannungspegel aller N Teilleitungen umgeladen werden. Diese Umladung wird vom schreibenden Daten-Sender zum Zeitpunkt $t_H$ ausgelöst. Da dieser schreibende Daten-Sender jedoch nur immer einer Teilleitung angehört, wird zunächst nur der Spannungspegel dieser schreibenden Teilleitung sL abgesenkt, während die restlichen Teilleitungen rL noch auf dem Ausgangsspannungspegel verbleiben. So bald aber der abfallende Spannungspegel den Trigger-Pegel S des zur schreibenden Teilleitung SL gehörenden Schaltgliedes SG zum Zeitpunkt $t'_S$ erreicht hat, schaltet dessen Ausgang auf das logische Gatter LG durch. Von diesem werden nun alle Entladetransistoren T1A, T1B,..., T1N geöffnet und die beschleunigten Umladungen der restlichen Teilleitungen rL eingeleitet. Die schreibende Teilleitung sL erreicht somit bereits zum Zeitpunkt $t'_{SL}$ den niedrigen Spannungspegel des Logikpegels L während die restlichen Teilleitungen rL aufgrund des etwas höheren Ausgangsniveaus erst zum späteren Zeitpunkt $t_{rL}$ folgen.

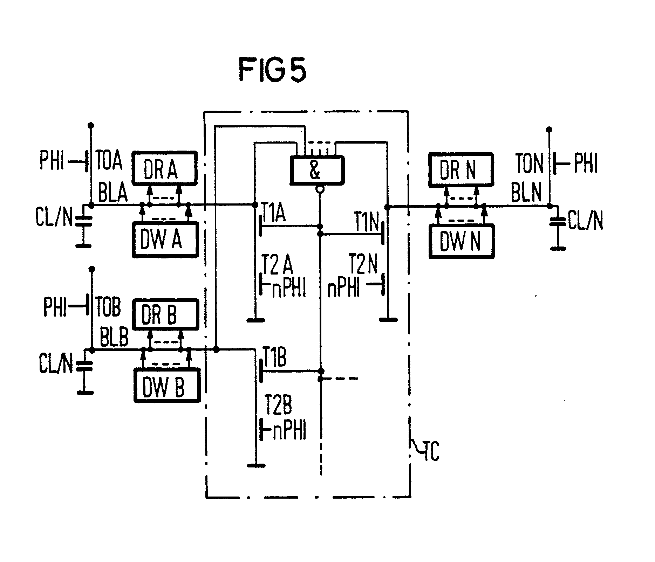

FIG 5 zeigt eine weitere erfindungsgemäße Schaltungsanordnung, bei der die Busleitung wie beim Ausführungsbeispiel nach FIG 3 in N Teilleitungen aufgetrennt und an eine gemeinsame Triggerschaltung TC angeschlossen ist. Auch hier enthält die Triggerschaltung TC Entladetransistoren T1A, T1B,..., T1N und Sperr-Transistoren T2A, T2B,..., T2N, wobei letztere wiederum zum Schutz der Schaltungsanordnung mit dem inversen Ladesignal nPHi beaufschlagt sind. Die Schaltglieder und das logische Gatter sind in der hier dargestellten Ausführungsform jedoch durch ein NAND-Glied mit N Eingängen ersetzt. Bei der Verwendung eines NAND-Gliedes kann nämlich auf separate Schaltglieder verzichtet werden, da bei einer geeigneten Ausbildung des NAND-Gliedes, beispielsweise durch die Dimensionierung der Eingangstransitoren, ein interner Triggerpegel eingestellt werden kann.

Mit den erfindungsgemäßen Schaltungsanordnungen nach FIG 3 und 5 sind die Entladezeiten $T_{SN}$ der restlichen Teilleitungen rL gegenüber der Entladezeit der schreibenden Teilleitung $T'_S$ zwar etwas länger, insgesamt ergibt sich aber eine deutliche Verkürzung der Gesamtentladezeit, da bei N Teilleitungen die Kapazität jeder Leitung nur 1/N der Gesamtkapazität CL beträgt. Die Entladezeit $T_{SN}$ einer N-geteilten Busleitung mit Triggerschaltung TC ist somit nur etwa 1/N der Entladezeit $T_S$ einer ungeteilten Busleitung BL mit Triggerschaltung.

**Patentansprüche**

1. Schaltungsanordnung an einer Busleitung (BL) einer integrierten Schaltung zur Datenübertragung zwischen Daten-Sendern (DW1, ..., DWY) und Daten-Empfängern (DR1,..., DRX), wobei während einer Vorladephase (VPh) die Bus-Leitung (BL) auf einen bestimmten elektrischen Spannungspegel geladen wird und während einer Datenübertragungsphase, entsprechend der zu übertragenden, digitalen Information, der Spannungspegel der Bus-Leitung (BL) belassen oder innerhalb einer Umladephase umgeladen wird und zur beschleunigten Umladung der Bus-Leitung (BL) an diese eine Triggerschaltung (TC) angeschaltet ist, die bei Erreichen eines vorgegebenen Triggerpegels (S) eine zusätzliche, beschleunigte Entladung der Busleitung (BL) bewirkt, **dadurch gekennzeichnet,** daß die Busleitung (BL) in N Teilleitungen (BLA, BLB,..., BLN) aufgeteilt ist, von denen jede über ein Schaltglied (SGA, SGB,..., SGN), das den Triggerpegel (S) mit dem jeweiligen Spannungspegel vergleicht, an einen Eingang eines logischen Gatters (LG) angeschlossen ist und daß der Ausgang des logischen Gatters (LG) Entladetransistoren (T1A, T1B,..., T1N) zur schnellen Entladung jeder einzelnen Teilleitung ansteuert.

2. Schaltungsanordnung nach Anspruch 1, **dadurch gekennzeichnet,** daß die Schaltglieder (SGA,..., SGN) und das logische Gatter (LG) durch ein NAND-Glied mit N Eingängen ersetzt sind.

3. Schaltungsanordnung nach Anspruch 2, **dadurch gekennzeichnet,** daß der Triggerpegel (S) durch die Dimensionierung des NAND-Gliedes festgelegt ist.

4. Sohaltungsanordnung nach einem der vorhergehenden Ansprüche, **dadurch gekennzeichnet,** daß der Triggerpegel (S) so gewählt ist, daß er ohne erhebliche Reduzierung des Störspannungsabstandes zwischen den Logikpegeln unverzüglich erreicht wird.

**Claims**

1. Circuitry on a bus line (BL) of an integrated circuit for data transmission between data transmitters (DW1,..., DWY) and data receivers (DR1,...,DRX), the bus line (BL) being charged to a specified electrical voltage level during a pre-charging phase (VPh) and, during a data transmission phase, the voltage level of the bus line (BL) being left unchanged or having its charge altered in a charge-changing phase, according to the digital information to be transmitted, and having a trigger circuit (TC) thereto, to accelerate the change in charge of the bus line (BL) such that, when a prescribed trigger level (S) is reached, the trigger circuit (TC) causes an additional accelerated discharge of the bus line (BL), characterised in that the bus line (BL) is split into N line segments (BLA, BLB,..., BLN), each of which is connected to an input of a logic gate (LG) via a switching element (SGA, SGB,...,SGN), which compares the trigger level (S) with the voltage level at that time, and in that the output of the logic gate (LG) triggers discharge transistors (T1A, T1B,..., T1N) for the rapid discharging of each individual line segment.

2. Circuitry according to Claim 1, characterised in that the switching elements (SGA,..., SGN) and the logic gate (LG) are replaced by a NAND-element having N inputs.

3. Circuitry according to Claim 2, characterised in that the trigger level (S) is determined by the dimensioning of the NAND-element.

4. Circuitry according to one of the preceding claims, characterised in that the trigger level (S) is selected such that it can be reached without delay, without significant reduction of the interference voltage separation between the logic levels.

**Revendications**

1. Montage associé à une ligne formant bus (BL) d'un circuit intégré pour la transmission de données entre des émetteurs de données (DW1,...,DWY) et des récepteurs de données (DR1,...,DRX), et dans lequel, pendant une phase de précharge (VPh), la ligne formant bus (BL) est chargée à un niveau déterminé de tension électrique et, pendant une phase de transmission de données, en fonction de l'information numérique devant être transmise, le niveau de tension de la ligne formant bus (BL) est maintenu ou est inversée pendant une phase d'inversion et, pour accélérer l'inversion de la ligne formant bus (BL), à cette dernière est raccordé un circuit de déclenchement (TC) qui, lorsqu'un niveau prédéterminé de déclenchement (S) est atteint, réalise une décharge supplémentaire accélérée de la ligne formant bus (BL), caractérisé par le fait que la ligne formant bus (BL) est subdivisée en N lignes partielles (BLA,BLB,...,BLN), dont chacune est raccordée, par l'intermédiaire d'un circuit de commutation (SGA,SGB,...,SGN), qui compare le niveau de déclenchement (S) au niveau respectif de tension, à une entrée d'une porte logique (LG), et que la sortie de la porte logique (LG) commande des transistors de décharge (T1A,T1B,...,T1N) pour réaliser la décharge rapide de chaque ligne partielle individuelle.

2. Montage suivant la revendication 1, caractérisé par le fait que les circuits de commutation (SGA,...,SGN) et la porte logique (LG) sont remplacés par une porte NON-ET comportant N entrées.

3. Montage suivant la revendication 2, caractérisé par le fait que le niveau de déclenchement (S) est fixé par le dimensionnement de la porte NON-ET.

4. Montage suivant l'une des revendications précédentes, caractérisé par le fait que le niveau de déclenchement (S) est choisi de manière qu'il soit atteint sans aucune réduction importante du rapport signal/bruit entre les niveaux logiques.

# FIG 1

# FIG 2

EP 0 288 740 B1

# FIG 3

# FIG 4

# FIG 5